# EUROPEAN PATENT SPECIFICATION

(11) **EP 0 503 760 B1**
(45) Date of publication and mention of the grant of the patent: **24.05.1995**
(21) Application number: 92300968.2
(22) Date of filing: 05.02.1992
(51) Int. Cl.: F16B 21/04, B65D 51/00

(54) **Bayonet coupling**
Bajonettkupplung
Accouplement à baionnette

(30) Priority: 28.02.1991 GB 9104225
(43) Date of publication of application: 16.09.1992
(73) Proprietor: BRITAX WINGARD LIMITED, Chichester, West Sussex P019 2AQ (GB)
(72) Inventor: Broderick, Keith Arthur, Fareham, Hampshire PO15 5HJ (GB)
(74) Representative: Hollinghurst, Antony

(56) References cited:
- EP-A- 0 429 336
- CH-A- 381 921
- FR-A- 2 322 793
- FR-A- 2 585 335
- GB-A- 681 687

## Description

This invention relates to a bayonet coupling, i.e., a coupling connecting a first element to a second element, in which the first element has a stem with a radially extending detent formation on its free end which is not symmetrical about the axis of the stem, the second element contains a cylindrical cavity one end of which is open and the other end of which has an end wall containing an opening shaped to allow inward passage of the detent formation past the end wall when the stem is in a first orientation relative to the opening and then to permit initial angular movement of the stem about its axis to a second orientation in which said the detent formation cannot move back past the end wall, next to permit further angular movement of the stem about its axis to a third orientation in which the detent formation can move outwards to an engaged position in which both further outward movement and angular movement of the stem about its axis to is prevented, the coupling further comprising locking means for preventing subsequent inward movement of the stem. GB-A-681687 discloses a coupling of this type in which the locking means engages with the inner end of the stem and has to be set by a separate manual operation and can be released by a similar manual operation.

According to the invention, in a coupling of the type described above, the locking means comprises a first locking formation on the stem on the opposite side of the detent formation to the free end of the stem and a second locking formation on the second element, the second locking formation being positioned within the cylindrical cavity so as to be engageable with the first locking formation when the stem is in its engaged position, one of said first and second locking formations being resiliently biased for radial movement towards the other of said first and second locking formations.

When the two elements are to be assembled together, the stem is first inserted into the opening in the second element, with the two elements in the first orientation relative to one another, until the detent formation on the stem has passed the complementary formation in the opening. The stem is then turned to its third orientation and moved to its locking position in which the first locking formation engages with the second locking formation.

In one form of the invention, the first locking formation comprises a recess in the periphery of the stem and the second locking formation comprises a resiliently mounted projection.

The stem may include a tapering ramp surface in its periphery positioned to engage with the resiliently mounted projection when the stem is in its first orientation.

Preferably, the radially extending detent formation comprises a flange on one end of the stem and the complementary formation comprises a wall extending across the opening and containing an opening of the same shape as the flange.

The invention may be applied to a cap for a filler pipe of a motor vehicle fuel tank of the type comprising a stem having a flange on one end supporting a gasket and a latch bar drive assembly on its other end, the latch bar drive assembly being coupled to the stem by a coupling according to the invention.

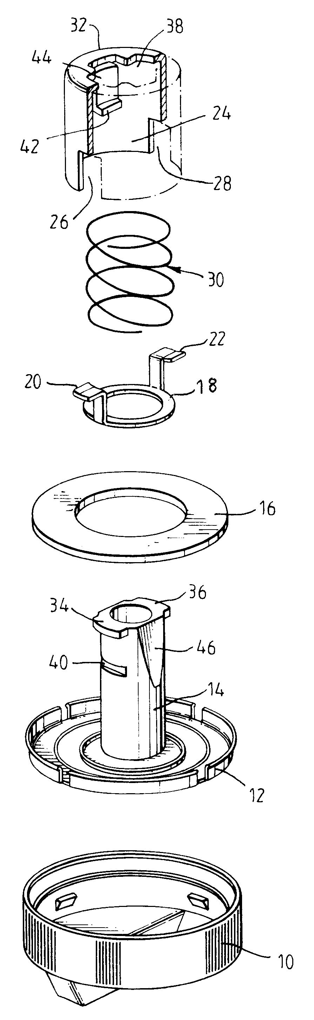

An embodiment of the invention will now be described, with reference to the accompanying drawing, which is an exploded perspective view of a cap for closing the filler pipe of the fuel tank of a motor vehicle.

The drawing shows a fuel cap assembly having a cap 10 which is rigidly secured to a body 12 having a stem 14 which, in use, projects down the fuel filler pipe. A resilient gasket 16 is mounted on the body 12 so as to surround the stem 14 and, in use, engages with the free end of the filler pipe. A latch bar 18 is mounted on the stem 14 and has projecting lugs 20 and 22 which, in use, engage with complementary formations on the filler pipe. A latch bar drive member 24 has openings 26 and 28 which engage with the lugs 20 and 22 so as to prevent relative rotation between the latch bar 18 and the latch bar drive member 24. A compression spring 30 engages between the latch bar 18 and the latch drive bar member 24 so as to bias the latch bar 18 into abutment with the body 12 while permitting limited relative axial movement. All of these features are present in a conventional cap for the fuel filler pipe of a motor vehicle fuel tank and they will not, therefore, be described in any further detail.

The latch bar drive member 24 is coupled to the body 12 by a bayonet coupling in accordance with the invention. As can be seen from the drawing, the latch bar drive is of generally hollow cylindrical shape and has an end wall 32 at the opposite end to the cap 10. The step 14 of the body 12 has two radial projections 34 and 36 on its free end and the end wall 32 has an opening 38 shaped to allow passage of the projections 34 and 36 when the stem 14 is in a first orientation relative to the latch bar, as illustrated in the drawing.

The stem 14 also has a groove 40 aligned with the projection 34. The latch bar drive carries a projection 42 which is mounted on the free end of a resilient limb 44 extending from the wall 32. The distance between the projection 42 and the wall 32 is equal to the distance between the projection 34 and the groove 40 on the stem 14.

The stem 14 has a similar groove to the groove 40 on the diametrically opposite side thereof and the latch bar drive member 24 has a similar projection to the projection 42 on the diametrically opposite side thereof.

The stem 14 also has a ramp surface 46 at an orientation at 90° to the groove 40, and a corresponding ramp (not shown) on the diametrically side thereof. When the stem 14 is inserted into the latch bar drive member 24, the projection 42, and the corresponding projection on the diametrically opposite side, engage with these two ramps. Insertion continues until the projections 34 and 36 have passed through the opening 38 in the wall 32 of the latch bar drive member 24. The latch bar drive member 24 is then turned through 90° relative to the stem 14 in which position the projections 34 and 36 can once again enter into the opening 38. When the two parts are released in this relative orientation, the spring 30 causes the projections 34 and 36 to move back into the opening 38 whereupon the projections 42 snap into the groove 40 and prevent subsequent relative axial movement between the body 12 and the latch bar drive member 24. Engagements of the projections 34 and 36 in the opening 38 prevent subsequent relative angular movement and consequently the latch bar drive member 24 is held fast with the body 12. Axial movement of the latch bar 18 is still possible by compressing the spring 30.

## Claims

1. A coupling connecting a first element (12) to a second element (24), in which the first element (12) has a stem (14) with a radially extending detent formation (34, 36) on its free end which is not symmetrical about the axis of the stem (14), the second element (24) contains a cylindrical cavity one end of which is open and the other end of which has an end wall (32) containing an opening (38) shaped to allow inward passage of the detent formation (34, 36) past the end wall (32) when the stem (14) is in a first orientation relative to the opening (38) and then to permit initial angular movement of the stem (14) about its axis to a second orientation in which said the detent formation (34, 36) cannot move back past the end wall (32), next to permit further angular movement of the stem (14) about its axis to a third orientation in which the detent formation (34, 36) can move outwards to an engaged position in which both further outward movement and angular movement of the stem (14) about its axis to is prevented, the coupling further comprising locking means for preventing subsequent inward movement of the stem (14), whereby the locking means comprises a first locking formation (40) on the stem (14) on the opposite side of the detent formation (34, 36) to the free end of the stem (14) and a second locking formation (42) on the second element (24), the second locking formation (42) being positioned within the cylindrical cavity so as to be engageable with the first locking formation (40) when the stem (14) is in its engaged position, one of said first and second locking formations (40, 42) being resiliently biased for radial movement towards the other of said first and second locking formations (40, 42).

2. A coupling according to claim 1, wherein the wall of the cylindrical cavity in the second element (24) obstructs manual access to the locking means.

3. A coupling according to claim 1 or 2, wherein the first locking formation comprises a recess (40) in the periphery of the stem (14) and the second locking formation comprises a resiliently mounted projection (42).

4. A coupling according to claim 1, 2 or 3, wherein the stem (14) includes a tapering ramp surface (46) in its periphery positioned to engage with the resiliently mounted projection (42) when the stem (14) is in its first orientation.

5. A coupling according to any preceding claim, wherein the radially extending detent formation comprises a flange (34, 36) on one end of the stem (14) and the complementary formation (32) comprises a wall extending across the opening and containing an opening (38) of the same shape as the flange (34, 36).

6. A cap for a filler pipe of a motor vehicle fuel tank, comprising a stem (14) having a main flange (12) on one end supporting a gasket (16) and a latch bar drive assembly (24) on its other end, the latch bar drive assembly (24) being coupled to the stem (14) by a coupling according to any preceding claim.

## Patentansprüche

1. Eine ein erstes Element (12) mit einem zweiten Element (24) verbindende Kupplung, in der das erste Element (12) einen Schaft (14) mit einer sich radial erstreckenden Sperrformation (34, 36) an seinem freien Ende, das nicht symmetrisch zur Achse des Schafts (14) ist, besitzt, und das zweite Element (24) einen zylindrischen Hohlraum enthält, dessen eines Ende offen ist und dessen anderes Ende eine Endwand (32) besitzt, die eine Öffnung (38) enthält, die geformt ist, um eine Hineinführung der Sperrformation (34, 36) hinter die Endwand (32) zu gestatten, wenn der Schaft (14) in einer ersten Orientierung relativ zur Öffnung (38) ist, und dann eine anfängliche Winkelbewegung des Schafts (14) um seine Achse in eine zweite Orientierung zu gestatten, in der sich die Sperrformation (34, 36) nicht zurück hinter die Endwand (32) bewegen kann, als nächstes eine weitere Winkelbewegung des Schafts (14) um seine Achse in eine dritte Orientierung zu gestatten, in der sich die Sperrformation (34, 36) nach außen in eine Eingriffsposition bewegen kann, in der sowohl weitere Auswärtsbewegung als auch Winkelbewegung des Schafts (14) um seine Achse verhindert wird, wobei die Kupplung des weiteren eine Verschlußeinrichtung zur Verhinderung anschließender Bewegung des Schafts (14) nach innen beinhaltet, wobei die Verschlußeinrichtung eine erste Verschlußformation (40) am Schaft (14), an der gegenüberliegenden Seite der Sperrformation (34, 36) zum freien Ende des Schafts (14) hin, beinhaltet, und eine zweite Verschlußformation (42) an dem zweiten Element (24), wobei die zweite Verschlußformation (42) in dem zylindrischen Hohlraum positioniert ist, so daß sie mit der ersten Verschlußformation (40) in Eingriff kommen kann, wenn der Schaft (14) in seiner Eingriffsposition ist, wobei eine der ersten und der zweiten Verschlußformationen (40, 42) zur radialen Bewegung in Richtung der anderen der ersten und der zweiten Verschlußformationen (40, 42) federnd vorgespannt ist.

2. Eine Kupplung nach Anspruch 1, worin die Wand der zylindrischen Kavität im zweiten Element (24) den manuellen Zugang zur Verschlußeinrichtung blockiert.

3. Eine Kupplung nach Anspruch 1 oder 2, worin die erste Verschlußformation eine Aussparung (40) in der Peripherie des Schafts (14) beinhaltet, und die zweite Verschlußformation einen federnd befestigten Ansatz (42) beinhaltet.

4. Eine Kupplung nach Anspruch 1, worin der Schaft (14) eine abgeschrägte, rampenartige Fläche (46) in seiner Peripherie beinhaltet, die so angeordnet ist, daß sie mit dem federnd befestigten Ansatz (42) in Eingriff steht, wenn der Schaft (14) in seiner ersten Orientierung ist.

5. Eine Kupplung nach einem der voranstehenden Ansprüche, worin die sich radial erstreckende Sperrformation einen Flansch (34, 36) an einem Ende des Schafts (14) beinhaltet, und die komplementäre Formation (32) eine Wand umfaßt, die sich über die Öffnung erstreckt und eine Öffnung (38) derselben Form wie der Flansch (34, 36) enthält.

6. Ein Deckel für einen Füllstutzen eines Kraftfahrzeugstreibstofftanks, der einen Schaft (14) mit einem eine Dichtung (16) tragenden Hauptflansch (12) an einem Ende und ein Sperriegelbetätigungsbaugruppe (24) an seinem anderen Ende enthält, wobei die Sperriegelbetätigungsbaugruppe (24) mit dem Schaft (14) durch eine Kupplung gemäß einem der voranstehenden Ansprüche gekoppelt ist.

## Revendications

1. Accouplement reliant un premier élément (12) à un second élément (24), dans lequel le premier élément (12) comprend un embout en forme de tige (14) muni d'une structure d'enclenchement s'étendant radialement (34, 36) sur son extrémité libre, qui n'est pas symétrique autour de l'axe de l'embout (14), le second élément (24) contient une cavité cylindrique dont une extrémité est ouverte et dont l'autre extrémité comprend une paroi d'extrémité (32) contenant une ouverture (38) profilée pour permettre le passage vers l'intérieur de la structure d'enclenchement (34, 36), au-delà de la paroi d'extrémité (32), lorsque l'embout (14) est dans une première orientation par rapport à l'ouverture (38) et pour permettre ensuite un déplacement angulaire initial de l'embout (14) autour de son axe jusque dans une seconde orientation dans laquelle ladite structure d'enclenchement (34, 36) ne peut se rétracter au-delà de la paroi d'extrémité (32), afin d'autoriser ensuite un déplacement angulaire supplémentaire de l'embout (14) autour de son axe, dans une troisième orientation dans laquelle la structure d'enclenchement (34, 36) peut se déplacer vers l'extérieur, dans une position d'engagement dans laquelle à la fois un déplacement vers l'extérieur et un déplacement angulaire supplémentaires de l'embout tubulaire (14) autour de son axe sont empêchés, l'accouplement comprenant en outre des moyens de verrouillage pour empêcher tout déplacement ultérieur vers l'intérieur de l'embout (14), les moyens de verrouillage comprenant une première structure de verrouillage (40) sur l'embout (14), sur le côté opposé de la structure d'enclenchement (34, 36) vers l'extrémité libre de l'embout (14) et une seconde structure de verrouillage (42) sur le second élément (24), la seconde structure de verrouillage (42) étant positionnée dans la cavité cylindrique de manière à pouvoir venir en prise avec la première structure de verrouillage (40) lorsque l'embout (14) est dans sa position d'engagement, l'une desdites première et seconde structures de verrouillage (40, 42) étant sollicitée élastiquement pour effectuer un déplacement radial vers l'autre desdites première et seconde structures de verrouillage (40, 42).

2. Accouplement selon la revendication 1, dans lequel la paroi de la cavité cylindrique dans le second élément (24) empêche un accès manuel aux les moyens de verrouillage.

3. Accouplement selon la revendication 1 ou 2, dans lequel la première structure de verrouillage comprend un renfoncement (40) dans la périphérie de l'embout (14) et la seconde structure de verrouillage comprend une saillie montée élastiquement (32).

4. Accouplement selon la revendication 1, dans lequel l'embout (14) comprend une surface en rampe effilée (46) sur sa périphérie, positionnée pour venir en prise avec la saillie montée élastiquement (42) lorsque l'embout (14) est dans sa première orientation.

5. Accouplement selon l'une quelconque des précédentes revendications, dans lequel la structure d'enclenchement s'étendant radialement comprend un rebord (34, 36) sur une extrémité de l'embout (14) et la structure complémentaire (32) comprend une paroi s'étendant transversalement à l'ouverture et comportant une ouverture (38) de même forme que celle du rebord (34, 36).

6. Bouchon pour un tuyau de remplissage d'un réservoir de carburant de véhicule automobile, comprenant un embout en forme de tige (14) muni d'un rebord principal (12) sur une extrémité supportant un joint (16) et un ensemble de commande de bague de verrouillage (24) sur son autre extrémité, l'ensemble de commande de bague de verrouillage (24) étant accouplé à l'embout (14) par un accouplement selon l'une quelconque des précédentes revendications.
